(19) **Europäisches Patentamt European Patent Office Office européen des brevets**

(11) **EP 2 610 084 B1**

(12) **EUROPEAN PATENT SPECIFICATION**

(45) Date of publication and mention of the grant of the patent:
**18.05.2016 Bulletin 2016/20**

(21) Application number: **11820009.6**

(22) Date of filing: **25.08.2011**

(51) Int Cl.:
*B60C 11/04* ^(2006.01)     *B60C 11/117* ^(2006.01)
*B60C 11/13* ^(2006.01)     *B60C 11/01* ^(2006.01)

(86) International application number:
**PCT/JP2011/069219**

(87) International publication number:
**WO 2012/026546 (01.03.2012 Gazette 2012/09)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2010 JP 2010188379**

(43) Date of publication of application:
**03.07.2013 Bulletin 2013/27**

(73) Proprietor: **Bridgestone Corporation Tokyo 104-8340 (JP)**

(72) Inventor: **AOKI, Naotoshi Tokyo 104-8340 (JP)**

(74) Representative: **Lamb, Martin John Carstairs Marks & Clerk LLP 90 Long Acre London WC2E 9RA (GB)**

(56) References cited:
**EP-A1- 2 338 702       WO-A1-96/36501**
**JP-A- 2001 219 711    JP-A- 2004 161 202**
**JP-A- 2007 022 151**

**Description**

Technical Field

The present invention relates to a pneumatic tire.

Background Art

In the interests of tire weight reduction, manufacturing methods which protrude a cap rubber layer of tread rubber are disclosed in JP-A-2006-248090. Another tire is disclosed in WO-A-9636501.

SUMMARY OF INVENTION

Technical Problem

From the perspective of tire weight reduction, lug grooves in a shoulder portion need to be made shallower in order to suppress the overall rubber gauge of a tread portion. However simply making grooves shallower reduces the groove volume, making it difficult to secure wet weather performance.

Generally, a tire case formed by for example a carcass layer curves towards the tire radial direction inside in the vicinity of the shoulder portions. A belt layer that reinforces the carcass layer is further laminated at the tire radial direction inside of the tread portion, and a tire width direction edge portion of the belt layer is positioned at the tire radial direction inside of the shoulder portion. It is accordingly difficult to secure rubber gauge between the groove bottoms of the lug grooves and the tire width direction edge portion of the belt layer at the shoulder portions. Manufacturing measures such as those of the related example described above may be considered inadequate on their own to secure rubber gauge.

Moreover, there is a need to increase the rigidity of a tire width direction outside edge portion of the shoulder portion in order to secure dry road surface braking performance.

When the tire rolling, the belt layer moves so as to bulge towards the tire radial direction outside. It is therefore particularly important to secure the rubber gauge of the tread portion at the tire width direction edge portion of the belt layer in order to secure durability.

In consideration of the above circumstances, an object of the present invention is to maintain wet weather performance whilst achieving a reduction in weight of a tire.

Solution to Problem

The present invention provides a tire according to claim 1.

A first aspect of the present invention includes: a lug groove that is formed at a shoulder portion at a tire width direction outermost side of a tread portion, that extends in a direction intersecting the tire circumferential direction, and that is positioned at a tire radial direction outside of a tire width direction outside edge portion of a belt layer positioned to a tire radial direction inside of the tread portion; and a raised bottom portion that is disposed at a position in the lug groove corresponding to a tire width direction outside edge portion of the belt layer and has a bottom raised in comparison to the groove bottom at a general portion of the lug groove.

The reason the raised bottom portion of the lug groove bottom is disposed at a position corresponding to the tire width direction outside edge portion (belt edge) of the belt layer is because, the belt edge is generally disposed in this region, and when attempting to suppress the rubber gauge of the tread portion overall it would otherwise be difficult to secure gauge from the covering rubber of the belt edge to the lug groove bottom.

In the pneumatic tire of the first aspect, the lug groove of the shoulder portion is positioned to the tire radial direction outside of the belt edge. Since the raised bottom portion of the lug groove bottom is set at an appropriate position corresponding to the belt edge, the volume of the lug groove can be maintained and the rubber gauge between the lug groove bottom and the belt edge can be secured even though the rubber gauge of the tread portion overall is suppressed. Accordingly, wet weather performance can be maintained whilst achieving a reduction in the weight of the tire.

A second aspect of the present invention is the pneumatic tire of the first aspect wherein, when a tire width direction width of the tread portion is denoted TW, the raised bottom portion is provided at the lug groove bottom in a region 0.9 TW/2 or greater towards the tire width direction outside from a tire equatorial plane, so as to be raised with respect to the groove bottom at a region less than 0.9 TW/2 towards the tire width direction outside from the tire equatorial plane.

The reason the raised bottom portion of the lug groove bottom is provided in a region 0.9 TW/2 or greater towards the tire width direction outside from the tire equatorial plane is because the belt edge is generally disposed in this region, and when attempting to suppress the rubber gauge of the tread portion overall it would otherwise be difficult to secure gauge from the treated rubber at the edge portion to the lug groove bottom.

In the pneumatic tire of the second aspect, since the raised bottom portion of the lug groove bottom is set at a more appropriate position corresponding to the belt edge, the volume of the lug groove can be maintained, and the rubber gauge between the lug groove bottom and the belt edge can be secured, even though the rubber gauge of the tread portion overall is suppressed. Accordingly, wet weather performance can be maintained whilst achieving a reduction in the weight of the tire.

A third aspect of the present invention is the pneumatic tire of either the first aspect or the second aspect wherein a tire radial direction outermost point of the raised bottom portion is positioned in a region from 0.9 TW/2 to 1.1 TW/2 towards the tire width direction outside from the tire equatorial plane.

The reason the tire radial direction outermost point of the raised bottom portion is provided in the region from 0.9 TW/2 to 1.1TW/2 towards the tire width direction outside from the tire equatorial plane is because, if the position of the raised bottom portion is less than at 0.9 TW/2, the volume of the lug grooves within the ground contact face of the tire decreases, and water expulsion performance worsens. However, if the position of the raised bottom portion is greater than 1.1 TW/2, the raised bottom portion and the belt edge be out of alignment with each other, with it becoming difficult to secure the gauge from the treated rubber of the belt edge to the lug groove bottom when the rubber gauge of the tread portion overall is suppressed.

In the pneumatic tire of the third aspect, since the position of the tire radial direction outermost point of the raised bottom portion is appropriately set, the volume of the raised bottom portion can be set to the minimum necessary whilst still being able to secure a greater volume for the lug groove. A higher level of wet weather performance can accordingly be maintained.

Advantageous Effects of Invention

As explained above, the pneumatic tire of the first aspect of the present invention can achieve the excellent advantageous effect of maintaining wet weather performance whilst being capable of achieving a reduction in the weight of the tire.

The pneumatic tire of the second aspect can achieve the excellent advantageous effect of maintaining wet weather performance whilst still being capable of achieving a reduction in the weight of the tire.

The pneumatic tire of the third aspect can achieve the excellent advantageous effect of being able to maintain wet weather performance at a higher level.

BRIEF DESCRIPTION OF DRAWINGS

Fig. 1 to Fig. 3 relate to a first exemplary embodiment; Fig. 1 is a cross-section illustrating a pneumatic tire.
Fig. 2 is an enlarged cross-section illustrating a tread portion of a pneumatic tire.
Fig. 3 is an enlarged plan view illustrating a tread pattern of a pneumatic tire.
Fig. 4 and Fig. 5 relate to a second exemplary embodiment; Fig. 4 is a cross-section illustrating a pneumatic tire.
Fig. 5 is an enlarged cross-section illustrating a tread portion of a pneumatic tire.

DESCRIPTION OF EMBODIMENTS

Explanation follows regarding exemplary embodiments of the present invention with reference to the drawings.

First Exemplary Embodiment

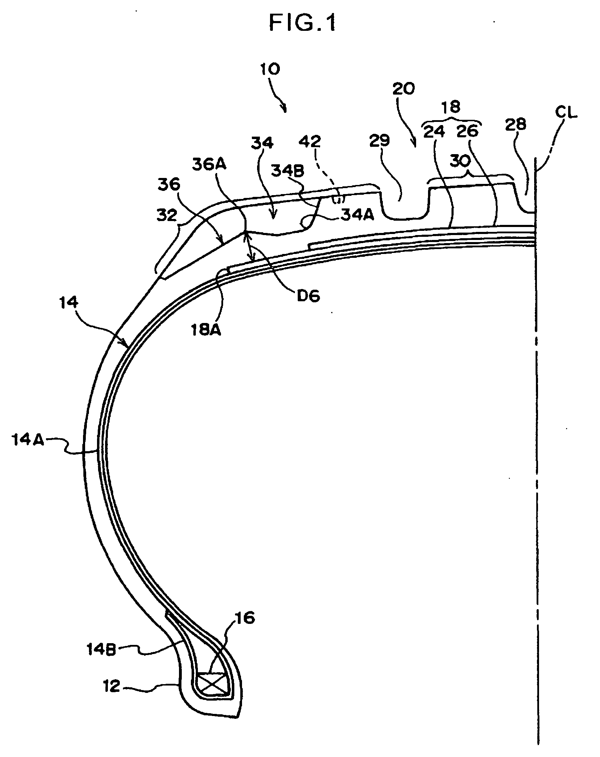

Fig. 1 shows a pneumatic tire 10 according to the present exemplary embodiment. The pneumatic tire 10 includes: a pair of bead portions 12; a carcass 14 of one or more layers, the carcass 14 including a carcass body portion 14A positioned between the pair of bead portions 12 and disposed spanning between the pair of bead portions 12 in a toroid shape; and a fold-back portion 14B wrapped around a bead core 16 at each bead portion 12; a belt layer 18 disposed to a tire radial direction outside of the carcass 14; and a tread portion 20 disposed to a tire radial direction outside of the belt layer 18.

The belt layer 18 is configured from one or more ply. The illustrated example is configured with two laminated plies 24, 26. Of the two plies 24, 26, the ply 26 that is positioned on the side nearest the carcass 14 (on a tire radial direction inside) is configured with a larger tire width direction dimension than that of the ply 24. A tire width direction outside edge portion of the belt layer 18 (a belt edge 18A) is configured by an edge portion of the ply 26. Namely, the belt edge 18A indicates the tire width direction outermost side edge portion of the belt layer 18. The belt layer 18 is positioned to a tire radial direction inside of the tread portion 20.

The tread portion 20 is formed with plural circumferential direction main grooves extending along the tire circumferential direction (a center side circumferential direction main groove 28 and outside circumferential direction main grooves 29). The center side circumferential direction main groove 28 is for example positioned at a tire equatorial plane CL, and the outside circumferential direction main grooves 29 are positioned further towards the tire width direction outside than the center side circumferential direction main groove 28. The tread portion 20 is formed with a central region land portion 30 partitioned by the center side circumferential direction main groove 28 and the outside circumferential direction main grooves 29. Shoulder portions 32 are further formed at the tire width direction outside of the outside circumferential direction main grooves 29.

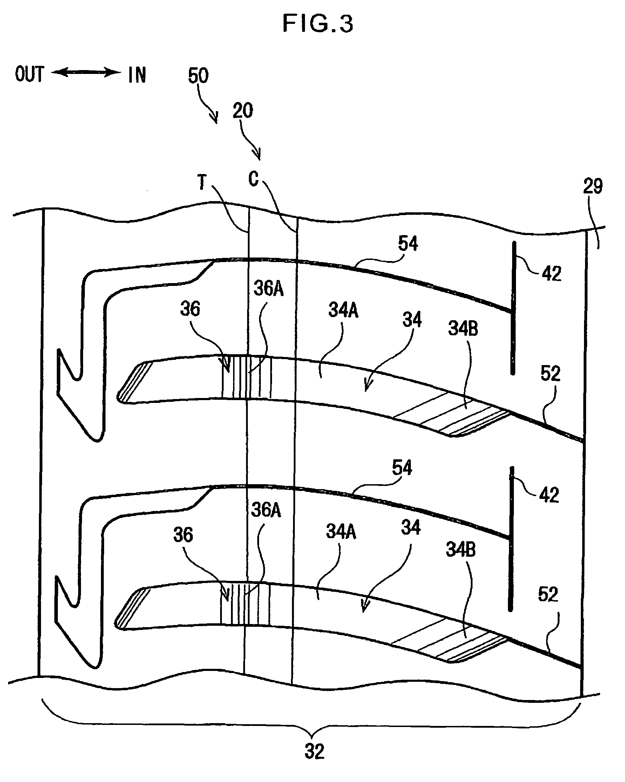

The shoulder portions 32 are land portions positioned at the tire width direction outermost side of the tread portion 20. The shoulder portions 32 are formed with lug grooves 34 that extend in a direction intersecting with the tire circumferential direction and that are positioned at a tire radial direction outside of the tire width direction outside edge portions (the belt edges 18A) of the belt layer 18. As shown in Fig. 3, the lug grooves 34 extend from position partway between the outside circumferential direction main groove 29 side of the shoulder portions 32 towards the tire width direction outside. The lug grooves 34 and the outside circumferential direction main grooves 29 are in communication with each other through fine grooves 52. Fine grooves 42 extending in the tire circumferential direction are provided intermittently at positions of the tire width direction inside end portions of the lug grooves 34.

As shown in Fig. 3, fine grooves 54 extending in the tire width direction are provided between tire circumferential direction adjacent lug grooves 34. The tire width direction inside end portions of the fine grooves 54 intersect with and terminate at the fine grooves 42.

Each of the lug grooves 34 is provided with a raised bottom portion 36 at a position in the lug groove 34 corresponding to the tire width direction outside edge portion (the belt edge 18A) of the belt layer 18, the raised bottom portion 36 having a raised bottom in comparison to a general portion of a groove bottom 34A of the lug groove 34. Note that reference to the general portion means a region of the lug groove 34 that is a region to the tire width direction inside of the raised bottom portion 36 with greatest groove depth of the lug groove 34. The general portion does not include a sloping face 34B at the tire width direction inside end portion of the lug groove 34. Moreover, reference to the raised bottom portion 36 having a raised bottom means that the groove depth is shallower than the groove depth of the general portion with respect to the surface of the tread portion 20 as measured on normal lines from the surface of the tread portion 20.

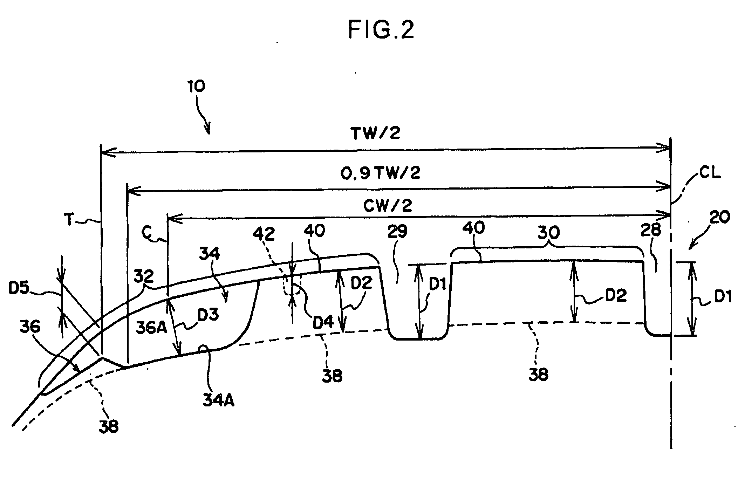

In Fig. 2, when the tire width direction width of the tread portion 20 is denoted TW, the raised bottom portion 36 is provided at the groove bottom of the lug groove 34, provided in a direction from the tire equatorial plane CL to the tire width direction outside, in a region 0.9 TW/2 or greater towards the tire width direction outside from a tire equatorial plane CL so as to be raised with respect to the groove bottom 34A at a region less than 0.9 TW/2. A tire radial direction outermost point 36A of the raised bottom portion 36 is for example positioned in a region from 0.9 TW/2 to 1.1 TW/2 towards the tire width direction outside from the tire equatorial plane CL.

As shown in Fig. 2, the raised bottom portion 36 becomes gradually higher on progression from the tire width direction inside towards the tire width direction outside. After reaching an apex at the tire radial direction outermost point 36A, the raised bottom portion 36 becomes gradually lower. In other words, at the raised bottom portion 36 the groove bottom 34A of the lug groove 34 becomes gradually higher on progression from the tire width direction inside towards the tire width direction outside, and then gradually drops away after reaching the apex at the tire radial direction outermost point 36A.

As shown in Fig. 2 and Fig. 3, the tire radial direction outermost point 36A of the raised bottom portion 36 is formed at a position TW/2 towards the tire width direction outside from the tire equatorial plane CL, and the raised bottom portion 36 is provided continuing beyond the TW/2 position as far as the tire width direction outside. Note that the position of the tire radial direction outermost point 36A of the raised bottom portion 36 may be set slightly to the tire width direction inside of the TW/2 position towards the tire width direction outside from the tire equatorial plane CL.

Moreover, the belt edge 18A of the belt layer 18 is present uniformly around the tire circumferential direction, and therefore the raised bottom portions 36 in each of the lug grooves 34 are also formed uniformly around the tire circumferential direction. The tread width TW indicates "tread width" as defined in the 2010 YEAR BOOK published by JATMA. In Fig. 2, a position TW/2 from the tire equatorial plane CL indicates a tread edge T.

The reason the raised bottom portion 36 of the lug groove 34 bottom is provided at a position corresponding to the belt edge 18A in the lug groove 34, and specifically in a region 0.9 TW/2 or greater towards the tire width direction outside from the tire equatorial plane CL, is because at a position less than this, the volume of the lug grooves 34 within a ground contact face 40 is reduced, and water expulsion performance drops. The belt edge 18A of the belt layer 18 is also generally positioned in this region, and it would otherwise become difficult to secure a gauge D6 from the treated rubber of the belt edge 18A to the lug groove 34 bottom when attempting to suppress the rubber gauge of the tread portion 20 overall.

The reason the tire radial direction outermost point 36A of the raised bottom portion 36 is moreover provided in the region 1.1 TW/2 or less towards the tire width direction outside from the tire equatorial plane CL is because: firstly, at a position greater than this the raised bottom portion 36 and the belt edge 18A would be out of alignment with each other, and it would be difficult to secure the gauge from the treated rubber of the belt edge 18A to the lug groove 34 bottom when the rubber gauge of the overall tread portion 20 is suppressed; and secondly, the lug groove 34 would become extremely shallow at a tire width direction outside edge portion of the lug groove 34, leading to a drop in water expulsion performance and poor design characteristics.

Explanation follows regarding examples of the dimensions of each portion of the tread portion 20. A dimension D1 is the depth of the center side circumferential direction main groove 28 and the outside circumferential direction main grooves 29. A dimension D2 is the distance in the central region land portion 30 and the shoulder portions 32 to the ground contact face 40 from an extension line 38 of the cross-section shape of the groove bottom 34A of the lug groove 34. A dimension D3 is the depth of the lug groove 34 at a CW/2 position towards the tire width direction outside from the tire equatorial plane CL.

CW indicates the tire width direction length (ground contact width) of a portion of the tread portion 20 that makes ground contact when the pneumatic tire 10 is in ground contact whilst mounted to a standard rim, inflated to a standard internal pressure, and loaded at 100% of a standard load. A contact edge C in this state is illustrated in Fig. 3. Note that due to deformation of the pneumatic tire 10, the position of the ground contact edge during braking (not shown in the drawings) moves further to the tire width direction outside than the contact edge C when a static load is applied.

"Standard rim" refers for example to a standard rim of an applicable size as defined by the 2010 YEAR BOOK published by JATMA, and "standard load" and "standard internal pressure" likewise refer to the maximum load and air pressure corresponding to the maximum load for the applicable size and ply rating as defined in the 2010 YEAR BOOK published by JATMA.

Where TRA standards or ETRTO standards are applicable at the location of use or the location of manufacture these respective standards are adhered to.

A dimension D4 is the depth of the fine grooves 42 formed in the tire circumferential direction in the shoulder portions 32. A dimension D5 is the tire radial direction depth from the tire surface to the tire radial direction outermost point 36A of the raised bottom portion 36. Note that at each location, dimension D1 to dimension D4 are measured in a direction intersecting orthogonally with a tangent to the ground contact face 40. Dimension D2 to dimension D5 are defined with reference to dimension D1, for example as follows.

$$D2 = D1 - 1.6$$

$$D3 = D2 \times 0.85$$

$$D4 = D2 \times 0.3$$

$$D5 = D3 \times 0.5$$

As an example, the difference in tire radial direction height between the tire radial direction outermost point 36A of the raised bottom portion 36 and the extension line 38 is about 5mm.

Although omitted from the drawings, a general layer may be provided for reinforcement of the edge portions of the plies 24, 26 of the belt layer 18. Cushion rubber may also be provided between edge portions of the plies 24, 26 and the tread portion 20.

Operation

Explanation follows regarding operation of the present exemplary embodiment configured as described above. In the pneumatic tire 10 of the present exemplary embodiment illustrated in Fig. 1, the lug grooves 34 of the shoulder portions 32 are positioned at the tire radial direction outside of the tire width direction outside edge portion (belt edge 18A) of the belt layer 18. By setting the raised bottom portion 36 of the lug groove 34 bottom at an appropriate position corresponding to the belt edge 18A, the volume of the lug groove 34 can be maintained, and the rubber gauge D6 from the treated rubber of the belt edge 18A to the lug groove 34 bottom can be adequately secured, even though the rubber gauge of the overall tread portion 20 is suppressed overall.

In other words, the rubber gauge D6 would sometimes be insufficient when the rubber gauge of the tread portion 20 is suppressed overall. On the other hand, raising the groove bottom 34A of the lug groove 34 overall would greatly reduce the groove volume. By providing the raised bottom portion 36 to a portion of the groove bottom 34A of the lug groove 34 at a position corresponding to the belt edge 18A, the rubber gauge D6 at the belt edge 18A can be secured whilst suppressing any reduction in groove volume.

Moreover, by appropriately setting the position of the tire radial direction outermost point 36A of the raised bottom portion 36, the volume of the raised bottom portion 36 can be suppressed to the minimum required, enabling a larger volume to be secured for the lug groove 34. Wet weather performance can accordingly be maintained at a high level, whilst still enabling a reduction in weight of the tire.

Note that the tread portion 20 is formed with the center side circumferential direction main groove 28 and the outside circumferential direction main grooves 29, however the number of circumferential direction main grooves is not limited thereto. The central region land portion 30 and the shoulder portions 32 are given as examples of land portions of the tread portion 20, however land portions other than the shoulder portions 32 may be configured as desired.

The tire radial direction outermost point 36A of the raised bottom portion 36 is positioned in a region from 0.9 TW/2 to 1.1 TW/2 towards the tire width direction outside from the tire equatorial plane CL, however there is no limitation thereto, and appropriate changes may be made thereto according to the position of the belt edge 18A of the belt layer 18.

Second Exemplary Embodiment

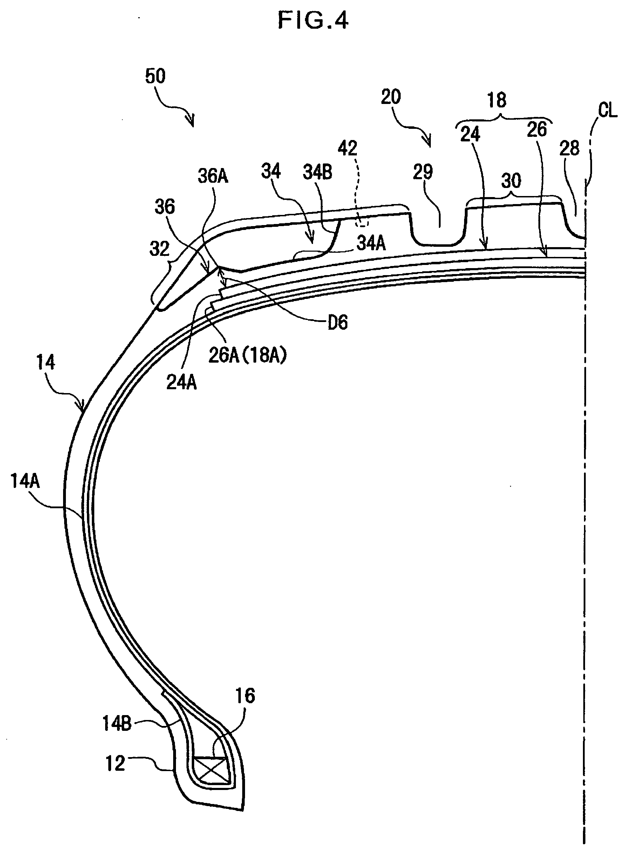

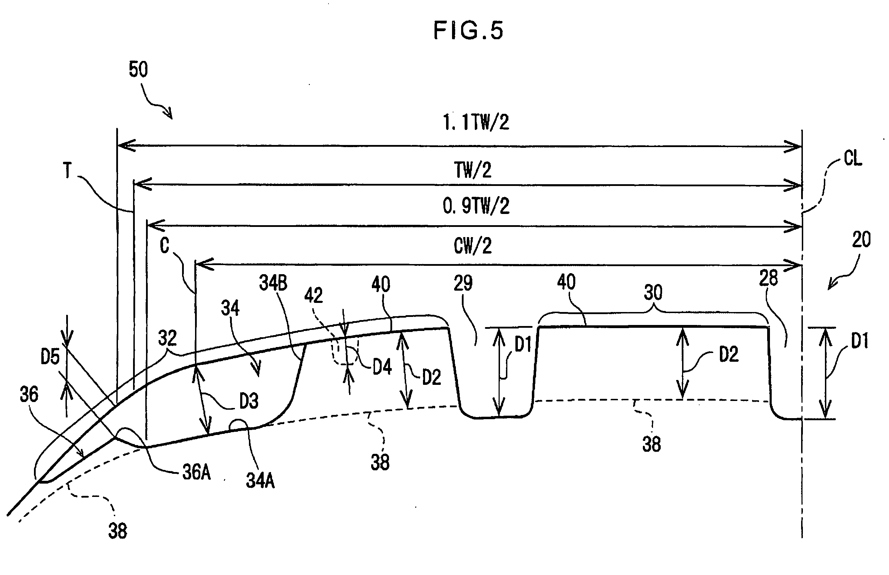

In a pneumatic tire 50 according to the present exemplary embodiment illustrated in Fig. 4 and Fig. 5, the width of a tire radial direction outside ply 24 of a belt layer 18 is set greater than that of the first exemplary embodiment. An edge portion 24A of the ply 24 is at a position close to an edge portion 26A of a ply 26 (belt edge 18A). A raised bottom portion 36 of the groove bottom of a lug groove 34 is positioned at the tire radial direction outside of the edge portions 24A, 26A.

Moreover, in the present exemplary embodiment, a tire radial direction outermost point 36A of the raised bottom portion 36 is formed at a position at 1.1 TW/2 towards the tire width direction outside from the tire equatorial plane CL. The position of the tire radial direction outermost point 36A is configured further towards the tire width direction outside than the tire radial direction outermost point 36A of the first exemplary embodiment.

The configuration of other portions and the operation of the present exemplary embodiment are similar to those of the first exemplary embodiment, and similar portions are allocated the same reference numerals in the drawings, and explanation thereof is omitted. Note that the configurations of each of the exemplary embodiments may be employed in appropriate combinations.

Test Examples

An Example provided with raised bottom portions provided at lug grooves and Comparative Examples 1 and 2 without raised bottom portions are tested for tire durability, wet weather performance and dry weather performance. The test conditions are as set out below, and the test results are as shown in Table 1.

Tire size: 195/65R15
Internal pressure: 230 kPa
Rim used: 6J

The presence or absence of the raised bottom portions and the differences in volume of the lug grooves are as set out in Table 1. The Comparative Example 1 does not have raised bottom portions, and the volume of the lug grooves is the same as in the Example. The Comparative Example 2 is not provided with the raised bottom portions, and the volume of the lug grooves is smaller than that of the Example.

Durability is evaluated by evaluating steering stability at a large steering angle in a test vehicle on a dry road surface over a running distance until a degree of abrasion occurs to the tread surface. In Table 1, G indicates that no abnormality is present in the abrasion state of the tread face, whilst NG indicates that abnormalities such as block damage are present in the tread face.

Wet weather performance is evaluated using a test vehicle on a wet road surface with a water depth of 0.08m, by performing a braking test of coming to a stop from 100 km/h. In Table 1, G indicates marketability, and NG indicates non-marketability.

Dry weather performance is evaluated using a test vehicle on a dry road surface, by performing a braking test of stopping from 100 km/h. In Table 1, G indicates marketability, and NG indicates non-marketability.

From the results shown in Table 1, it can been seen that the Comparative Example 1 has excellent wet weather performance, however performs weakly in durability and dry weather performance. The Comparative Example 2 has excellent durability and dry weather performance, however performs weakly in wet weather performance. By contrast, the Example is confirmed excellent in each area of durability, wet weather performance and dry weather performance.

|  | Example | Comparative Example 1 | Comparative Example 2 |
|---|---|---|---|
| Raised Bottom Portion Present/Absent | Present | Absent | Absent |
| Volume of Lug Grooves | - | Same as Example | Smaller than Example |
| Durability | G | NG | G |
| Wet Weather Performance | G | G | NG |
| Dry Weather Performance | G | NG | G |

Explanation of the Reference Numerals

10     PNEUMATIC TIRE

18     BELT LAYER

18A    BELT EDGE (TIRE WIDTH DIRECTION OUTSIDE EDGE)

20     TREAD PORTION

32     SHOULDER PORTION

34     LUG GROOVE

34A    GROOVE BOTTOM

36     RAISED BOTTOM PORTION

36A    TIRE RADIAL DIRECTION OUTERMOST POINT

CL     TIRE EQUATORIAL PLANE CL

TW     TREAD WIDTH

**Claims**

1.  A pneumatic tire comprising:

    a lug groove (34) that is formed at a shoulder portion (32) at a tire width direction outermost side of a tread portion (20), that extends in a direction intersecting the tire circumferential direction, and that is positioned at a tire radial direction outside of a tire width direction outside edge portion of a belt layer (18) positioned at a tire radial direction inside of the tread portion; and
    a raised bottom portion (36) that is provided at the lug groove bottom (34) in a region 0.9 TW/2 or greater towards a tire width direction outside from a tire equatorial plane (CL), so as to be raised with respect to the groove bottom at a region less than 0.9 TW/2 towards a tire width direction outside from the tire equatorial plane, when a tire width direction width of the tread portion is denoted TW, wherein outside circumferential main grooves (29) are positioned so that the shoulder portions are formed at the tire width direction outside of the outside circumferential direction main grooves (29), **characterized in that** the lug grooves (34) and the outside circumferential direction main grooves (29) are in communication with each other through fine grooves (52).

2.  The pneumatic tire of claim 1, wherein, when a ground contact width in the tire width direction is denoted CW, the raised bottom portion (36) is positioned further towards the tire width direction outside than a CW/2 position towards the tire width direction outside from the tire equatorial plane.

3. The pneumatic tire of claim 1 or claim 2, wherein a tire radial direction outermost point (36A) of the raised bottom portion (36) is positioned in a region from 0.9 TW/2 to 1.1 TW/2 towards the tire width direction outside from the tire equatorial plane.

**Patentansprüche**

1. Luftreifen, umfassend:

   eine Ansatznut (34), die an einem Schulterabschnitt (32) an einer äußersten Seite in einer Breitenrichtung des Reifens eines Laufflächenabschnitts (20) gebildet ist, der sich in einer Richtung erstreckt, die die Umfangsrichtung des Reifens schneidet, und die in einer radialen Richtung des Reifens außerhalb des Kantenabschnitts einer Gürtelschicht (18) in einer Breitenrichtung des Reifens positioniert ist, die an einer radialen Reifenrichtung innerhalb des Laufflächenabschnitts positioniert ist; und

   einen erhöhten unteren Abschnitt (36), der am Boden der Ansatznut (34) in einem Bereich 0,9 TW/2 oder größer hin zu einer Breitenrichtung des Reifens außerhalb einer Äquatorialebene (CL) des Reifens bereitgestellt ist, um mit Bezug auf den Boden der Nut in einem Bereich von weniger als 0,9 TW/2 hin zu einer Breitenrichtung des Reifens außerhalb einer Äquatorialebene des Reifens gehoben zu sein, wenn eine Breite in der Breitenrichtung des Reifens des Laufflächenabschnitts als TW bezeichnet wird, wobei äußere Hauptnuten des äußeren Umfangs (29) derart positioniert sind, dass die Schulterabschnitte an der Breitenrichtung des Reifens außerhalb der Hauptnuten in der äußeren Umfangsrichtung (29) gebildet sind, **dadurch gekennzeichnet, dass** die Ansatznuten (34) und die Hauptnuten der äußeren Umfangsrichtung (29) miteinander durch feine Nuten (52) in Verbindung sind.

2. Luftreifen nach Anspruch 1, wobei, wenn eine Breite eines Bodenkontakts in der Breitenrichtung des Reifens als CW bezeichnet wird, der erhöhte untere Abschnitt (36) weiter hin zur Breitenrichtung des Reifens nach außen als eine CW/E-Position hin zur Breitenrichtung des Reifens außerhalb einer Äquatorialebene positioniert ist.

3. Luftreifen nach Anspruch 1 oder Anspruch 2, wobei der äußerste Punkt der radialen Richtung des Reifens (36A) des erhöhten unteren Abschnitts (36), in einem Bereich von 0,9 TW/2 bis 1,1 TW/2 hin zur Breitenrichtung des Reifens außerhalb einer Äquatorialebene positioniert ist.

**Revendications**

1. Bandage pneumatique, comprenant :

   une rainure à barrettes (34) formée au niveau d'une partie d'épaulement (32) sur un côté externe extrême, dans une direction de la largeur du bandage pneumatique, d'une partie de bande de roulement (20) s'étendant dans une direction coupant la direction circonférentielle du bandage pneumatique, et positionnée dans une direction radiale du bandage pneumatique à l'extérieur d'une partie de bordure extérieure, dans la direction de la largeur du bandage pneumatique, d'une couche de ceinture (18) positionnée dans une direction radiale du bandage pneumatique à l'intérieur de la partie de bande de roulement ; et

   une partie de fond surélevée (36) agencée au niveau du fond de la rainure à barrettes (34), dans une région de 0,9 TW/2 ou plus vers une direction de la largeur du bandage pneumatique, à l'extérieur d'un plan équatorial du bandage pneumatique (CL), de sorte à être surélevée par rapport au fond de la rainure, dans une région de moins de 0,9 TW/2 vers une direction de la largeur du bandage pneumatique, à l'extérieur du plan équatorial du bandage pneumatique, lorsqu'une largeur, dans la direction de la largeur du bandage pneumatique, de la partie de bande de roulement est désignée par TW, dans lequel des rainures principales circonférentielles externes (29) sont positionnées de sorte que les parties d'épaulement sont formées dans la direction de la largeur du bandage pneumatique, à l'extérieur des rainures principales dans la direction circonférentielle externe (29), **caractérisé en ce que** les rainures à barrettes (34) et les rainures principales dans la direction circonférentielle extérieure (29) communiquent les unes avec les autres à travers de fines rainures (52).

2. Bandage pneumatique selon la revendication 1, dans lequel, lorsqu'une largeur de contact au sol, dans la direction de la largeur du bandage pneumatique, est désignée par CW, la partie de fond surélevée (36) est positionnée davantage vers l'extérieur dans la direction de la largeur du bandage pneumatique qu'une position de CW/2 dans la direction de la largeur du bandage pneumatique, à l'extérieur du plan équatorial du bandage pneumatique.

3. Bandage pneumatique selon la revendication 1 ou 2, dans lequel un point externe extrême dans la direction radiale du bandage pneumatique (36A) de la partie de fond surélevée (36) est positionné dans une région allant de 0,9 TW/2 à 1,1 TW/2 dans la direction de la largeur du bandage pneumatique, à l'extérieur du plan équatorial du bandage pneumatique.

# FIG.1

# FIG.2

EP 2 610 084 B1

# FIG.3

FIG.4

# FIG.5

EP 2 610 084 B1

**EP 2 610 084 B1**

**Patent documents cited in the description**

- JP 2006248090 A

- WO 9636501 A